# EUROPÄISCHE PATENTSCHRIFT

(11) **EP 3 811 025 B1**
(45) Veröffentlichungstag und Bekanntmachung des Hinweises auf die Patenterteilung: **01.11.2023**
(21) Anmeldenummer: 19728915.0
(22) Anmeldetag: 28.05.2019
(51) Int. Cl.: G01B 9/04, G01B 11/24, G02B 21/00

(54) **VORRICHTUNG ZUR CHROMATISCH KONFOKALEN OPTISCHEN VERMESSUNG UND KONFOKALEN ABBILDUNG EINES MESSOBJEKTS SOWIE VERFAHREN**
DEVICE FOR CHROMATIC CONFOCAL OPTICAL MEASUREMENT AND CONFOCAL IMAGING OF A MEASUREMENT OBJECT, AND METHOD
DISPOSITIF DE MESURE OPTIQUE CONFOCALE CHROMATIQUE ET D'IMAGERIE CONFOCALE D'UN OBJET DE MESURE ET PROCÉDÉ D'EXÉCUTION

(30) Priorität: 20.06.2018 DE 102018114860; 06.03.2019 DE 102019001498
(43) Veröffentlichungstag der Anmeldung: 28.04.2021
(73) Patentinhaber: Precitec Optronik GmbH, 63263 Neu-Isenburg (DE)
(72) Erfinder: DIETZ, Christoph, 63179 Obertshausen (DE); SCHÖNLEBER, Martin, 63263 Neu-Isenburg (DE); PICHOT, Jean-Francois, 13530 Trets (FR); ANDRÉ, Stephan, 63110 Rodgau (DE)
(74) Vertreter: Ostertag & Partner Patentanwälte mbB
(86) Internationale Anmeldenummer: PCT/EP2019/063867
(87) Internationale Veröffentlichungsnummer: WO 2019/243008

(56) Entgegenhaltungen:
- US-A1- 2013 135 715
- US-B1- 9 739 600
- CHA S ET AL: "NONTRANSLATIONAL THREE-DIMENSIONAL PROFILOMETRY BY CHROMATIC CONFOCAL MICROSCOPY WITH DYNAMICALLY CONFIGURABLE MICROMIRROR SCANNING", APPLIED OPTICS, OPTICAL SOCIETY OF AMERICA, WASHINGTON, DC; US, Bd. 39, Nr. 16, 1. Juni 2000 (2000-06-01), Seiten 2605-2613, XP000951755, ISSN: 0003-6935, DOI: 10.1364/AO.39.002605
- UEDA SHIN-ICHI ET AL: "Measurement of Axial Position of a Microsphere Using Chromatic Confocal System for Probe System Based on the Laser Trapping with the Standing Wave Scale", 2014 INTERNATIONAL SYMPOSIUM ON OPTOMECHATRONIC TECHNOLOGIES, IEEE, 5. November 2014 (2014-11-05), Seiten 223-227, XP032783683, DOI: 10.1109/ISOT.2014.60 [gefunden am 2015-06-05]

## Beschreibung

### HINTERGRUND DER ERFINDUNG

Die Erfindung liegt auf dem Gebiet der chromatisch-konfokalen Messtechnik und der Bildsensoren mit erweitertem Tiefenschärfebereich.

Eine gattungsgemäße Messeinrichtung umfasst eine Lichtquelle, welche Licht einer Mehrzahl von Wellenlängen emittiert, wobei ein Messobjekt mittels der Lichtquelle beleuchtet wird. Außerdem umfasst sie einen ersten Strahlteiler, wobei Licht der Lichtquelle über den ersten Strahlteiler und eine Abbildungsoptik auf ein Messobjekt abgebildet wird. Die Abbildungsoptik weist eine chromatische Aberration auf, derart, dass Licht unterschiedlicher Wellenlängen in unterschiedlichen Abständen von der Abbildungsoptik fokussiert wird.

Von dem Messobjekt reflektiertes Licht wird durch die Abbildungsoptik und den ersten Strahlteiler auf eine erste konfokale Detektionsblendenanordnung abgebildet, und durch die erste Detektionsblendenanordnung (10) fallendes Licht wird durch eine erste Detektionseinrichtung (16) erfasst und ausgewertet.

Aus der EP 3 222 964 A1 ist eine chromatisch-konfokale Vorrichtung zur Oberflächenbestimmung eines Objektes bekannt. Die Vorrichtung umfasst eine breitbandige Lichtquelle und eine Linse mit chromatischer Aberration, so dass Licht unterschiedlicher Wellenlängen in unterschiedlichen axialen Abständen fokussiert wird. Die Vorrichtung umfasst eine Mehrzahl optischer Messkanäle, welche jeweils einen Punkt auf der Objektoberfläche abbilden, wobei zumindest für einen Teil der Messkanäle eine Gesamtintensität über alle Wellenlängen ausgewertet wird statt einer spektralen Auswertung. In einer Ausführungsform der Vorrichtung werden die Ausgangskanäle durch optische Fasern mit Faserkopplern gebildet, so dass gleichzeitig eine Auswertung der Gesamtintensität und des Spektrums eines Messkanals erfolgen kann. Beleuchtungsseitig wird das Licht der Lichtquelle ebenfalls durch optische Fasern geleitet, wobei die Faserenden als konfokale Mess- bzw. Beleuchtungsaperturen dienen und durch die Vorrichtung auf die Messpunkte auf dem Objekt abgebildet werden.

Diese Vorrichtung hat jedoch den Nachteil, dass, bedingt durch die einzelnen Fasern, keine lückenlos gleichmäßige Beleuchtung und Abbildung des Objekts möglich ist. Zudem ist bei der Verwendung von Fasern der Durchmesser und Abstand der Messpunkte durch den Durchmesser der Fasern, welche die Messkanäle bilden, begrenzt. Im Fall, dass die gewünschten Messpunktabstände und -durchmesser deutlich kleiner sind als die Durchmesser und Abstände der Fasern, wird eine Objektiv mit einem Verkleinerungsmaßstab β < < 1 benötigt, was die Kosten und die Dimensionen für das Objektiv deutlich erhöht. Durch das Verhältnis von Faserkern zu Faseraußendurchmesser ist außerdem eine untere Grenze für das Verhältnis Punktdurchmesser zu Punktabstand gegeben. Sollen die Messpunktabstände und -durchmesser veränderbar sein, so werden bewegliche Teile des Objektivs benötigt, wodurch die Kosten und Dimensionen noch weiter steigen. Werden die Fasern weggelassen, so ist keine gleichzeitige Auswertung der Gesamtintensität und des Spektrums mehr möglich (Absatz 131 der EP 3 222 964 A1). Eine große Anzahl von Fasern und Faserkopplern, die benötigt werden würden, um einen großen räumlichen Bereich auf einmal zu vermessen, sind überdies sehr teuer und voluminös.

Es ist daher Aufgabe der Erfindung, eine kompakte, robuste, und günstig herstellbare Vorrichtung zur konfokal-chromatischen Abbildung und Messung eines Messobjekts anzugeben, welche gleichzeitig eine schnelle Bestimmung der Gesamtintensität und eine Auswertung eines reflektierten Spektrums desselben, in mindestens eine Richtung ausgedehnten, räumlichen Bereichs des Messobjekts erlaubt.

Es ist weiter Aufgabe der Erfindung, eine gleichzeitige schnelle Auswertung des Gesamtintensitätsbildes und des Spektrums zu ermöglichen, wobei die Messpunktabstände nicht durch die Optikkomponenten vorgegeben sind.

Diese Aufgaben werden durch die Vorrichtung des Anspruchs 1 und das Verfahren des Anspruchs 15 gelöst.

Die Erfindung beruht auf der Erkenntnis, dass durch Verwendung einer Beleuchtungsblendenanordnung mit einer ersten Schlitzblende als konfokale Apertur auf der Beleuchtungsseite eine gleichmäßige Ausleuchtung des Messbereichs entsteht, wodurch eine gleichmäßige Abbildung der von dem Messobjekt reflektierten Gesamtintensität auf einen schnellen Zeilendetektor in einer ersten Detektionseinrichtung möglich wird. Unter einer gleichmäßigen Ausleuchtung wird dabei eine Ausleuchtung weitgehend kontinuierlich gleichbleibender Intensität verstanden, im Gegensatz zu diskreten Messpunkten, welche durch ein Raster von konfokalen Lochblenden beleuchtet werden. Überraschend wurde festgestellt, dass trotz der Verwendung dieser räumlich ausgedehnten Apertur statt den bekannten punktförmigen Aperturen auch eine Auswertung der spektralen Verteilung des vom Messobjekt reflektierten Lichts möglich ist, wodurch beispielsweise eine Höheninformation bestimmbar ist. Um eine gleichzeitige Auswertung sowohl der Gesamtintensität als auch der spektralen Verteilung der Oberfläche des Messobjekts zu ermöglichen, ohne die Vorteile der ausgedehnten konfokalen Apertur (Schlitzblende) zu verlieren, umfasst die Messeinrichtung einen zweiten Strahlteiler, welcher das von der Probe reflektierte Licht in zwei Teilstrahlen aufspaltet, so dass die Teilstrahlen gleichzeitig unterschiedlich ausgewertet werden können. Dabei wird erfindungsgemäß eine Gesamtintensität über alle Wellenlängen des einen Teilstrahls durch eine erste Detektionseinrichtung ausgewertet und Licht des anderen Teilstrahls spektral aufgespalten und Intensitäten einzelner Wellenlängen oder Wellenlängenbereiche durch eine zweite Detektionseinrichtung bestimmt.

Erfindungsgemäß weist die Abbildungsoptik eine ausgeprägte chromatische Aberration auf. Die chromatische Aberration ist dabei vorteilhafterweise derart ausgeprägt, dass die Fokusebene der kürzesten verwendeten Wellenlänge und der längsten verwendeten Wellenlänge um eine Distanz voneinander entfernt sind, die einem vorgegebenen Höhenmessbereich der Messeinrichtung entsprechen. Vorteilhafterweise umfasst die Abbildungsoptik zu diesem Zweck mindestens eine Linse mit einer Abbe-Zahl kleiner 50, bevorzugt kleiner 40, besonders bevorzugt kleiner 30, auf.

Bevorzugt ist die erste konfokale Detektionsblendenanordnung im Strahlengang zwischen dem zweiten Strahlteiler und der ersten Detektionseinrichtung angeordnet und eine zweite konfokale Detektionsblendenanordnung ist im Strahlengang zwischen dem zweiten Strahlteiler und der zweiten Detektionseinrichtung angeordnet. Die Verwendung zweier unterschiedlicher Detektionsblendenanordnung für die zwei unterschiedlichen Detektionseinrichtungen hat den Vorteil, dass unterschiedliche Blenden verwendet werden können, welche besser auf die Anforderungen der Detektionseinrichtungen angepasst sind. So kann z.B. die Breite oder Länge von Schlitzblenden angepasst werden, um eine unterschiedliche räumliche Auflösung zu erhalten und gleichzeitig die Konfokalitätsbedingung für beide Detektionseinrichtungen möglichst gut zu erfüllen.

Besonders bevorzugt umfasst die Beleuchtungsblendenanordnung eine Mehrzahl von Öffnungen, wobei eine zweite Öffnung der Beleuchtungsblendenanordnung mit einer Detektionsöffnung der zweiten Detektionsblendenanordnung als konfokale Apertur zusammenwirkt. Hierdurch ergibt sich noch mehr Flexibilität in der Wahl der Öffnungen, so dass die Abbildungsparameter des Lichtes, welches auf die Detektionseinrichtungen fällt, vollständig entkoppelt voneinander gewählt werden können.

In einer weiteren besonders bevorzugten Ausführungsform umfasst die Beleuchtungsblendenanordnung eine Mehrzahl von Öffnungen, und die zweite Detektionsblendenanordnung ist austauschbar ausgeführt. Alternativ zur Austauschbarkeit kann ein Teil ("Shutter") der zweiten Detektionsblendenanordnung beweglich ausgeführt sein. Dadurch kann die Öffnung bzw. die Öffnungen der zweiten Detektionsblendenanordnung verändert werden und wahlweise eine zweite Öffnung der Beleuchtungsblendenanordnung oder eine dritte Öffnung der Beleuchtungsblendenanordnung mit einer Detektionsöffnung der zweiten Detektionsblendenanordnung als konfokale Apertur zusammenwirken. Diese Ausführungsform hat den Vorteil, dass auf besonders kostengünstige und einfache Weise eine Messeinrichtung bereitgestellt wird, welche beispielsweise eine einstellbare räumliche Auflösung der zweiten Detektionseinrichtung ermöglicht. Zur Änderung der Auflösung muss lediglich eine Maske ausgetauscht werden oder ein Shutter bewegt werden, der die nicht verwendeten Detektionsöffnungen der zweiten Detektionsblendenanordnung verdeckt und Transmission von Licht nur durch eine Detektionsöffnung erlaubt.

In einer bevorzugten Ausführungsform der Erfindung umfasst die Beleuchtungsblendenanordnung mindestens zwei Öffnungen, wobei die erste Öffnung mit der ersten Detektionsblendenanordnung als konfokale Apertur zusammenwirkt und die zweite Detektionsblendenanordnung durch Austausch oder Bewegung eines beweglichen Teils entweder auch mit der ersten Öffnung der Beleuchtungsblendenanordnung, oder aber mit der zweiten oder einer weiteren Öffnung der Beleuchtungsblendenanordnung als konfokale Apertur zusammenwirkt.

In einer alternativen bevorzugten Ausführungsform der Erfindung wirkt die Öffnungen der Beleuchtungsblendenanordnung, insbesondere die erste Öffnung und die zweite Öffnung, jeweils ausschließlich entweder mit einer Detektionsöffnung der ersten Detektionsblendenanordnung oder mit einer Detektionsöffnung der zweiten Detektionsblendenanordnung als konfokale Apertur zusammen.

Bevorzugt sind die erste und die zweite Öffnung der Beleuchtungsblendenanordnung Schlitzblenden, deren Breiten sich unterscheiden. Alternativ ist die zweite Öffnung eine Lochblende, während die erste Öffnung eine Schlitzblende ist, wobei sich insbesondere die Breite der Schlitzblende (erste Öffnung) von dem Durchmesser der Lochblende unterscheidet. In diesem Fall umfasst die Beleuchtungsblendenanordnung vorteilhafterweise noch weitere Lochblenden, welche mit der zweiten Öffnung in einer Reihe angeordnet sind, um die Abbildung einen räumlich ausgedehnten Bereich des Objektes zu ermöglichen.

In einer bevorzugten Ausführungsform ist die erste konfokale Detektionsblendenanordnung im Strahlengang zwischen dem zweiten Strahlteiler und der ersten Detektionseinrichtung angeordnet und eine Mehrzahl von optischen Fasern zwischen dem zweiten Strahlteiler und der zweiten Detektionseinrichtung den zweiten Teilstrahl leitet, wobei insbesondere die Enden der Fasern als konfokale Aperturen dienen. Die Verwendung an Fasern an dieser Stelle hat den Vorteil, dass die zweite Detektionseinrichtung flexibel auch weiter entfernt angeordnet werden kann, insbesondere, da eine spektral aufspaltende Anordnung häufig Platz benötigt. Diese Anordnung kann mit den Vorteilen von Freistrahlanordnungen z.B. bei der Beleuchtung oder der ersten Detektionseinrichtung kombiniert werden.

Nach einer bevorzugten Ausführungsform der Erfindung ist die erste konfokale Detektionsblendenanordnung ebenfalls eine (zweite) Schlitzblende. Besonders bevorzugt entsprechen die Dimensionen der zweiten Schlitzblende, welche die erste konfokale Detektionsblendenanordnung bildet, den Dimensionen der ersten Schlitzblende. Dabei sind die erste und zweite Schlitzblende und die Abbildungsoptik so angeordnet, dass die fokussierte Abbildung der ersten Schlitzblende auf dem Messobjekt wiederum deckungsgleich auf die zweite Schlitzblende abgebildet wird. Dies ermöglicht eine optimale Ausnutzung des Informationsgehalts des Lichtstrahls.

Unter einer Schlitzblende ist im Kontext dieser Erfindung eine Blende zu verstehen, deren Ausdehnung in eine Richtung wesentlich länger (insbesondere mindestens doppelt so lang) ist als die Ausdehnung in eine dazu senkrechte Richtung. Vorzugsweise sind Schlitzblenden zumindest näherungsweise rechteckig, wobei auch eine alternative Ausformung, bspw. Rundung, der schmalen Kanten unter den Begriff Schlitzblende fällt.

Unter einer Gesamtintensität wird im Kontext dieser Erfindung eine durch einen Detektor an einem bestimmten Punkt oder über eine kleine, räumlich begrenzte Fläche (Pixel) über den gesamten verwendeten Wellenlängenbereich summierte gemessene Intensität verstanden. Dabei werden an verschiedenen Orten und/oder zu verschiedenen Zeitpunkten verschiedene Gesamtintensitäten bestimmt.

Vorteilhafterweise enthalten die erste und zweite Detektionseinrichtung Detektoren, die eingerichtet sind, den Ort des einfallenden Lichts räumlich aufzulösen. Dabei werden Intensitäten einfallenden Lichts an mehreren Orten bestimmt, beispielsweise durch eine Mehrzahl einzelner Detektorpixel. Derart ist eine räumliche Auflösung in die erste und zweite Detektionseinrichtung einfallenden Lichts entlang mindestens einer Dimension möglich, wobei bevorzugt die Dimension räumlich aufgelöst wird, die der längeren Kante der zweiten Schlitzblende entspricht.

Bevorzugt werden in der zweiten Detektionseinrichtung Matrixdetektoren verwendet, also Detektoren, welche eine Auflösung der einfallenden Lichtintensität in zwei Dimensionen erlauben. In einer bevorzugten Ausführungsform der Erfindung wird der Detektor in der zweiten Detektionseinrichtung so angeordnet, dass die längere Seite der Schlitzblende entlang der einen Dimension des Detektors abgebildet wird, während Licht unterschiedlicher Wellenlängen durch ein dispersives Element entlang der zweiten Dimension des Detektors aufgespalten wird.

Es ist bekannt, dass das Auslesen eines Zeilendetektors im Allgemeinen schneller erfolgen kann als das Auslesen aller Informationen eines Matrixdetektors. In anderen Worten hat ein Matrixdetektor eine kleinere sogenannte "Framerate" als ein Zeilendetektor. Daher kann eine Auswerterate eines solchen Zeilendetektors höher (schneller) gewählt werden. In einer bevorzugten Ausführungsform der Erfindung wird diese Tatsache ausgenutzt, indem eine Auswerterate des Zeilendetektors der ersten Detektionseinrichtung höher gewählt wird als eine Auswerterate der zweiten Detektionseinrichtung. Dies hat den Vorteil, dass ein Intensitätsbild schneller erstellt werden kann, wodurch beispielsweise während eines Scans des Messobjekts eine höhere Auflösung im Intensitätsbild (in Scanrichtung) möglich ist.

Vorteilhafterweise umfasst die zweite Detektionseinrichtung einen Verschluss ("Shutter") welcher die Beleuchtung des Matrixdetektors zumindest zeitweise unterbrechen kann. Auf diese Weise wird sichergestellt, dass während eines Scans des Messobjekts, also einer Bewegung relativ zum Messobjekt, für eine Auswerterate nur Licht eines kleinen räumlichen Bereichs auf den Matrixdetektor fällt, um ein verschmieren der Messwerte zu verhindern. Bevorzugt wird der Verschluss nur für den Zeitraum einer Auswertung des Zeilendetektors geöffnet. Vorteilhafterweise emittiert die Lichtquelle Licht über ein kontinuierliches Spektrum. Dies wird üblicherweise auch als "Breitband-Lichtquelle" bezeichnet.

Erfindungsgemäß wird nach dem bekannten chromatisch konfokalen Messprinzip aus der spektralen Verteilung des erfassten Lichts in der zweiten Detektionseinrichtung eine Höheninformation gewonnen. Es wird aus der von der zweiten Detektionseinrichtung erfassten Intensitätsverteilungen über eine Mehrzahl einzelner Wellenlängen oder Mehrzahl von Wellenlängenbereichen auf eine oder mehrere Höheninformationen der Oberfläche des Messobjekts zurückgeschlossen. Die Ermittlung der Höheninformationen erfolgt dabei direkt in der Detektionseinrichtung und/oder in einer zugeordneten Auswerteeinrichtung. Unter einer Höheninformation wird dabei beispielsweise ein Abstand der Oberfläche des Messobjekts von der Messeinrichtung oder von einer vorgegebenen Referenzebene oder die relative Höhe von Punkten auf der Oberfläche zueinander verstanden. Höheninformationen können, im Falle von Messobjekten, welche zumindest teilweise für das verwendete Licht transparent sind, auch Dicken des Messobjekts oder Dicken einzelner Schichten des Messobjekts umfassen.

Eine Auswertung der Gesamtintensität liefert eine Abbildung, welche zwar keine Höheninformation enthält, aber Strukturen quer zur Höhe abbilden kann, und zwar bedingt dadurch, dass verschiedene Wellenlängen auf verschiedenen Höhen im Bereich des Messobjekts fokalisiert sind, mit einer größeren Tiefenschärfe, als es ohne die chromatische Aberration der Abbildungsoptik der Fall wäre.

Nach einer bevorzugten Ausführungsform der Erfindung können das durch die erste Detektionseinrichtung gewonnene Gesamtintensitätsbild und die durch die zweite Detektionsanordnung gleichzeitig für den gleichen Messbereich gewonnene Höheninformationen kombiniert werden, beispielsweise durch eine Anzeigevorrichtung überlagert dargestellt werden. Besonders bevorzugt ist es möglich, sowohl eine Höheninformation als auch eine in der Ebene quer zur Höhe genauer aufgelöste Gesamtintensitätsabbildung auszuwerten und auszugeben.

Um die Vorteile der Schlitzblende gegenüber einem Raster von Lochblenden auszunutzen, wird bevorzugt das vom Messobjekt reflektierte Licht durch eine Freistrahloptik zwischen dem Messobjekt und der ersten Detektionseinrichtung propagiert. Es ist weiter bevorzugt, dass das Licht von der Lichtquelle bis zum Messobjekt durch eine Freistrahloptikpropagiert. Dies hat außerdem die Vorteile, dass sich die Messeinrichtung robuster gestalten lässt und billiger zu bauen ist, sowie weitgehend temperaturunabhängig ist.

Nach einer bevorzugten Ausführungsform der Erfindung ist der zweite Strahlteiler ein Strahlteilerwürfel, welcher besonders bevorzugt zwei miteinander verbundene Prismen umfasst, zwischen denen eine Strahlteilerfläche verläuft. Besonders bevorzugt ist auch der erste Strahlteiler in solcher Strahlteilerwürfel.

Nach einer besonders bevorzugten Ausführungsform der Erfindung ist die beleuchtungsseitige erste Schlitzblende unmittelbar auf eine Oberfläche des ersten Strahlteilers aufgebracht. Zusätzlich oder alternativ ist auch die erste konfokale Detektionsblendenanordnung unmittelbar auf eine Oberfläche des ersten oder zweiten Strahlteilers aufgebracht. Diese Umsetzung macht die Vorrichtung robuster, da ein Verschieben der optischen Komponenten zueinander unwahrscheinlicher wird. Besonders kompakt und einfach ist eine Ausgestaltung der Erfindung, in der die betreffenden Oberflächen der Strahlteilerwürfel durch eine intransparente Beschichtung abgedeckt sind und die Blenden durch beschichtungsfreie Stellen gebildet werden.

Das Teilungsverhältnis des Strahlteilers wird bevorzugt so gewählt, dass die Verteilung der Intensität des Messlichts auf die Teilstrahlen optimiert wird. Durch die zweite Detektionseinrichtung wird das Licht spektral aufgespaltet und auf einen Matrixdetektor gerichtet. Dadurch wird das Messlicht auf mehr Pixel verteilt als beim Zeilendetektor der ersten Detektionseinrichtung. Dieser Effekt wird bevorzugt durch das Teilungsverhältnis des Strahlteilers ausgeglichen.

Nach einer bevorzugten Ausführungsform der Erfindung ist die erste konfokale Detektionsblendenanordnung im Strahlengang des ersten Teilstrahls angeordnet und eine zweite konfokale Detektionsblendenanordnung ist im Strahlengang des zweiten Teilstrahls angeordnet. Besonders bevorzugt ist die erste Detektionsblendenanordnung eine (zweite) Schlitzblende und die zweite Detektionsblendenanordnung entweder eine Schlitzblende eine (dritte) Schlitzblende oder mindestens eine Reihe von Lochblenden.

Nach einer alternativen Ausführungsform der Erfindung ist die erste konfokale Detektionsblendenanordnung im Strahlengang zwischen dem ersten Strahlteiler und dem zweiten Strahlteiler angeordnet. Diese Ausführungsform hat den Vorteil, dass die Messeinrichtung besonders robust ist, da nur eine Detektionsblendenanordnung nötig ist und diese, wie oben angeführt, ebenso wie die beleuchtungsseitige erste Schlitzblende auf den ersten Strahlteilerwürfel aufgebracht werden kann, wodurch eine Verschiebung zueinander besonders unwahrscheinlich wird.

Nach einer weiteren alternativen Ausführungsform der Erfindung ist der zweite Strahlteiler als ein Beugungsgitter ausgeführt, wobei die nullte Beugungsordnung den ersten Teilstrahl bildet und die erste Beugungsordnung den zweiten Teilstrahl bildet. Dies ermöglicht eine besonders kompakte Bauweise.

Vorteilhafterweise sind zumindest Teile der Messeinrichtung in einen Messkopf integriert, bevorzugt zumindest die Abbildungsoptik und der erste und zweite Strahlteiler. Besonders bevorzugt ist der Messkopf in einer Richtung senkrecht zur optischen Achse weniger ausgedehnt als in die andere zur optischen Achse senkrechte Richtung. Besonders bevorzugt ist die weniger ausgedehnte Richtung die Richtung der schmaleren Kante der ersten Schlitzblende. Hierdurch wird eine kompaktere Bauweise möglich.

Nähere Einzelheiten zu den Ausführungsformen ist der Figurenbeschreibung zu entnehmen.

Die Erfindung betrifft außerdem ein Verfahren zur chromatisch konfokalen Vermessung eines Messobjekts, wobei das Messobjekt in einem in einer Dimension ausgedehnten räumlichen Bereich mittels einer Lichtquelle, welche Licht einer Mehrzahl von Wellenlängen emittiert, beleuchtet wird, wobei Licht unterschiedlicher Wellenlängen in unterschiedlichen Höhen im Bereich des Messobjekts fokussiert wird. Von dem Messobjekt reflektiertes Licht wird auf eine erste konfokale Detektionsblendenanordnung, insbesondere eine zweite Schlitzblende, abgebildet, derart, dass die erste Detektionsblendenanordnung als konfokale Apertur fungiert. Das Licht wird durch eine erste Detektionseinrichtung erfasst und ausgewertet. Das von dem Messobjekt reflektierte Licht wird durch einen zweiten Strahlteiler in zwei Teilstrahlen aufgespalten. Eine Gesamtintensität über alle Wellenlängen des ersten Teilstrahls wird erfasst und ausgewertet und das Licht des zweiten Teilstrahls wird spektral aufgespalten und Intensitäten einzelner Wellenlängen oder Wellenlängenbereichen erfasst und ausgewertet.

Aus der Verteilung der Intensität über die Wellenlängen oder Wellenlängenbereiche werden Höheninformationen gewonnen. Typischerweise entsprechen Wellenlängen mit einem (lokalen oder globalen) Maximum der Intensität einer Höheninformation.

Besonders bevorzugt werden die gewonnenen Höheninformationen Orten innerhalb des Messbereichs zugeordnet. Weiter bevorzugt werden die Höheninformationen Abschnitten eines Gesamtintensitätsbildes oder Gesamtintensitätsprofils zugeordnet. Vorteilhafterweise umfasst die Messeinrichtung Mittel zur Anzeige des Gesamtintensitätsbildes oder Gesamtintensitätsprofils und der zugeordneten Höheninformationen, beispielsweise überlagert oder anderweitig visuell zugeordnet.

In dem Fall, dass die Beleuchtungsblendenanordnung eine Mehrzahl von Öffnungen umfasst, welche teilweise mit der ersten Detektionsblendenanordnung und teilweise mit der zweiten Detektionsblendenanordnung als konfokale Apertur zusammenwirken, wird unter Umständen nicht der gleiche Bereich des Objektes durch die erste und zweite Detektionseinrichtung gemessen. In diesem Fall wird ein Versatz zwischen den Vermessenen Orten berechnet und bei der Darstellung der Informationen berücksichtigt.

Durch die gleichmäßige Ausleuchtung des Messbereichs und die gleichmäßige Abbildung auf die Detektionseinrichtungen wird es möglich, in der Auswertung den Effekt verschiedener Aperturen darzustellen, welche als virtuelle Aperturen aufgefasst werden können.

Im einfachsten Fall bilden dabei einzelne Pixel der verwendeten Detektoren, zusammen mit der Breite der verwendeten zweiten Schlitzblende im Zwischenbild effektive Aperturen. Dazu wird nur die Intensität dieser einzelnen Pixel in der Auswertung berücksichtigt; diese einzelnen Pixel bilden die transmittierenden Bereiche der konfokalen Aperturen. Die Intensität der übrigen Pixel wird in der Auswertung nicht berücksichtigt und bildet somit die nicht transmittierenden Bereiche der konfokalen Aperturen.

Durch geeignete Auswertung der Daten ist es auch möglich, andere virtuelle Aperturen darzustellen, beispielsweise indem verschiedene benachbarte Pixel zu einer Apertur zusammengefasst und die entsprechenden Intensitätswerte in der Auswertung summiert werden.

Virtuelle Aperturen können sich in mehreren Parametern unterscheiden: Anordnung der Mittelpunkte und Größe der Aperturen. Bevorzugt sind die Mittelpunkte in gleichmäßigen Abständen angeordnet, so dass die Orte der Mittelpunkte durch den Ort einer ersten Apertur und durch den Abstand zwischen den Mittelpunkten der Aperturen charakterisiert sind.

Vorteilhafterweise werden die Größen und Abstände der Aperturen passend zu den Strukturen der Oberfläche gewählt.

Bevorzugt werden für einen räumlichen Bereich des Objekts, ohne Bewegung der Messeinrichtung oder des Messobjekts relativ zueinander, mehrere Auswertungen mit verschiedenen konfokalen Aperturen durchgeführt. Nach herkömmlichen konfokalen Messverfahren sind die Mittelpunkte der Aperturen fest und es können daher, ohne den Messkopf oder das Messobjekt zu bewegen, nur die Höhen einzelner Punkte auf der Oberfläche bestimmt werden mit einem gewissen Abstand zwischen den Punkten. Durch die Verwendung virtueller Aperturen können insbesondere mehrere Auswertungen mit zueinander verschobenen Mittelpunkten der virtuellen Aperturen durchgeführt werden, wodurch der Abstand zwischen den einzelnen Höheninformationspunkten verringert werden kann. Dies stellt eine Art virtuellen Scan entlang der längeren Kante der zweiten Schlitzblende dar.

Vorteilhafterweise können die Messeinrichtung und das Messobjekt relativ zueinander bewegt werden, wobei bevorzugt in Richtung der schmalen Kante der Schlitzblenden ein Scan, d.h. mehrere Messungen an mehreren Positionen und eine gemeinsame Auswertung der Messdaten erfolgt. Auf diese Weise kann vorteilhafterweise ein Gesamtintensitätsbild erstellt werden, indem die Abbildungen mehrerer benachbarter Messbereiche gemeinsam dargestellt werden.

Vorteilhafterweise wird während eines Scans die Messeinrichtung, bzw. ein Teil der Messeinrichtung (Messkopf) relativ zum Messobjekt bewegt, bevorzugt in die Richtung der schmalen Kante der ersten Schlitzblende. Besonders bevorzugt wird die Geschwindigkeit der Bewegung dabei derart gewählt, dass sich innerhalb eines Auswertetaktes (d.h. einer Zeitspanne, über die ausgewertet wird) der ersten Detektionseinrichtung die Messeinrichtung um weniger als die Breite der ersten Schlitzblende bewegt. In jedem Auswertetakt wird ein Profil der Gesamtintensität gemessen, die verschiedenen Profile anschließend zu einem Gesamtbild zusammengesetzt.

Bevorzugt wird aus den Daten der zweiten Detektionseinrichtung für jeden Auswertetakt ein Profil von Höheninformationen (Höhenprofil) entlang der langen Kante der Schlitzblende erstellt.

Nach einer bevorzugten Ausführungsform der Erfindung wird der Lichteinfall auf die zweite Detektionseinrichtung zeitweise durch einen Verschluss blockiert, bevorzugt derart, dass der Matrixdetektor der zweiten Detektionseinrichtung nur für die Länge eines Auswertetaktes der ersten Detektionseinrichtung Licht empfängt. Dadurch wird erreicht, dass die gewonnenen Höheninformationen einer räumlich begrenzten Stelle der Oberfläche des Messobjektes entsprechen und nicht oder nur geringfügig verschmiert sind. Vorteilhafterweise wird dieser Vorgang mit der Auswertung der ersten Detektionseinrichtung synchronisiert, so dass bekannt ist, welchem Intensitätsprofil ein gegebenes Höhenprofil entspricht. Vorteilhafterweise werden die Informationen überlagert oder anderweitig visuell zugeordnet auf einer Ausgabevorrichtung da rgestel lt.

Nach einer weiteren bevorzugten Ausführungsform der Erfindung wir ein erster Scan zur Erstellung eines Intensitätsbildes durchgeführt und anschließend ein zweiter Scan zur Erfassung von Höheninformationen. Besonders bevorzugt werden Höheninformationen an Stellen besonderen Interesses, welche aus dem Intensitätsbild identifiziert werden, durchgeführt.

Im Anschluss werden Ausführungsbeispiele der Erfindung anhand von Figuren näher erläutert. Es zeigen:
- Fig. 1:: eine schematische Darstellung einer chromatisch konfokalen Messeinrichtung;
- Fig. 2:: eine bevorzugte Ausführungsform einer chromatisch konfokalen Messeinrichtung;
- Fig. 3:: eine weitere bevorzugte Ausführungsform einer chromatisch konfokalen Messeinrichtung;
- Fig. 4:: beispielhafte Blendenanordnungen;
- Fig. 5:: eine weitere bevorzugte Ausführungsform einer chromatisch konfokalen Messeinrichtung;
- Fig. 6:: eine schematische Prinzipzeichnung virtueller Aperturen;
- Fig. 7:: eine schematische Prinzipzeichnung eines virtuellen Scans;
- Fig. 8:: eine schematische Darstellung einer bevorzugten Ausführungsform einer chromatisch konfokalen Messeinrichtung;
- Fig. 9a und 9b:: eine weitere bevorzugte Ausführungsform einer chromatisch konfokalen Messeinrichtung;
- Fig. 10: beispielhafte Blendenanordnungen der Beleuchtungsblendenanordnung und Detektionsblendenanordnungen.

Gleiche Bezugszeichen werden für gleiche Teile in allen Figuren verwendet.

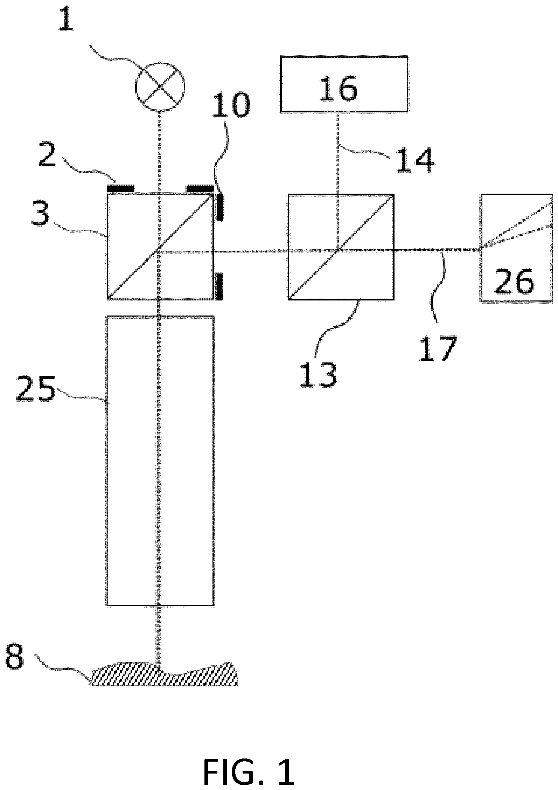

Figur 1 zeigt schematisch eine beispielsgemäße chromatisch konfokale Messeinrichtung.

Eine Lichtquelle 1, welche Teil einer Beleuchtungseinrichtung ist, emittiert Licht einer Mehrzahl von Wellenlängen, wobei die Beleuchtungseinrichtung dazu eingerichtet ist, ein Messobjekt 8 mittels der Lichtquelle 1 durch eine Abbildungsoptik 25 zu beleuchten. Die Beleuchtungseinrichtung umfasst eine erste Beleuchtungsblendenanordnung 2, welche als konfokale Apertur der Messeinrichtung fungiert und mindestens eine Schlitzblende umfasst.

Ein erster Strahlteiler 3 leitet das Licht von der Beleuchtungseinrichtung in eine Abbildungsoptik 25, wobei die Abbildungsoptik 25 eine ausgeprägte chromatische Aberration aufweist. Von dem Messobjekt reflektiertes Licht wird durch die Abbildungsoptik 25 und den ersten Strahlteiler 3 auf eine erste konfokale Detektionsblendenanordnung 10 abgebildet, derart, dass die erste Detektionsblendenanordnung 10 als konfokale Apertur fungiert.

Die Messeinrichtung umfasst einen zweiten Strahlteiler 13, welcher das vom Messobjekt 8 reflektierte Licht in einen ersten und einen zweiten Teilstrahl 14, 17 aufteilt, welche den selben räumlichen Bereich des Messobjekts 8 abbilden.

Die Messeinrichtung umfasst außerdem eine erste Detektionseinrichtung 16, welche durch die erste konfokale Detektionsblendenanordnung 10 fallendes Licht erfasst und auswertet und eine zweite Detektionseinrichtung 26. Die erste Detektionseinrichtung 16 ist eingerichtet, Licht des ersten Teilstrahls 14 mittels eines Zeilendetektors zu erfassen und Gesamtintensitäten über alle Wellenlängen auszuwerten. Die zweite Detektionseinrichtung 26 ist eingerichtet, zur gleichen Zeit Licht des zweiten Teilstrahls 17 spektral aufzuspalten und Intensitäten des Lichts einer Mehrzahl einzelner Wellenlängen oder einer Mehrzahl von Wellenlängenbereichen zu erfassen und auszuwerten.

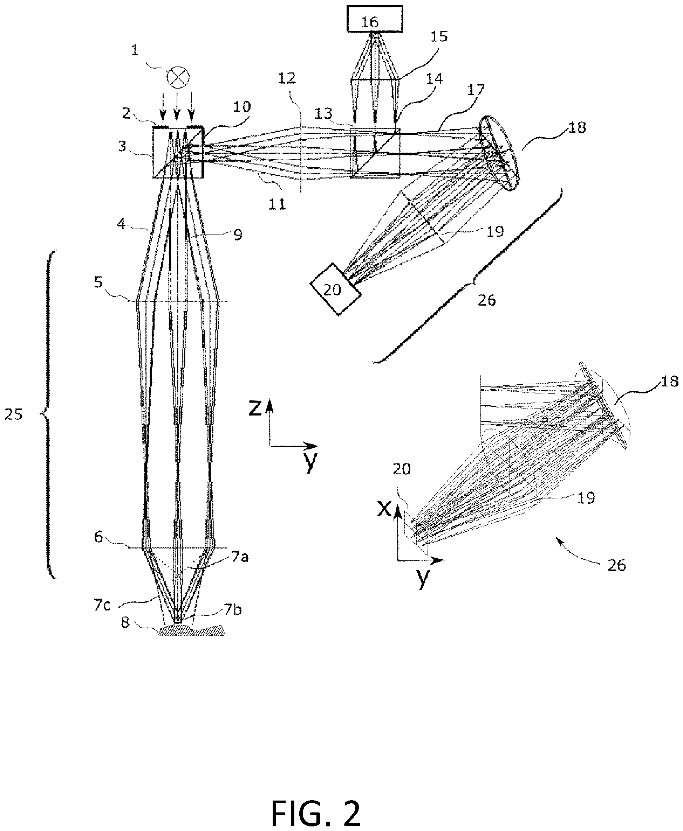

Figur 2 zeigt eine beispielhafte chromatisch konfokale Messeinrichtung nach einer bevorzugten Ausführungsform der Erfindung.

Eine Lichtquelle 1 emittiert Licht eine Mehrzahl von Wellenlängen. Das Licht fällt durch eine Beleuchtungsblendenanordnung 2, welche auf einer Seite eines ersten Strahlteilerwürfels 3 aufgebracht ist. Die Beleuchtungsblendenanordnung umfasst mindestens eine erste Schlitzblende. Die Lichtquelle 1 und die Beleuchtungsblendenanordnung 2 bilden zusammen eine Beleuchtungseinrichtung.

Das Licht wird anschließend durch eine Abbildungsoptik 25, welche beispielhafterweise aus einer ersten Linse 5 und einer zweiten Linse 6 gebildet wird, auf ein Messobjekt 8 abgebildet. Der Strahlengang ist durch die Linien 4 schematisch illustriert. Durch die chromatische Aberration der Abbildungsoptik 25 wird Licht unterschiedlicher Wellenlängen an unterschiedlichen Punkten bzw. Höhen 7a, 7b, 7c relativ zum Messobjekt 8 fokussiert.

Durch das Messobjekt 8 reflektiertes Licht fällt zurück durch die Abbildungsoptik (i.e. Linsen 6 und 5) und den ersten Strahlteilerwürfel 3. Der Strahlengang ist durch die Linie 9 schematisch illustriert.

Im Strahlteilerwürfel 3 wird ein Teil des Lichts in Richtung Lichtquelle 1 zurück transmittiert, während ein anderer Teil des Lichts in Richtung eines zweiten Strahlteilerwürfels 13 reflektiert wird. Auf der Oberfläche des ersten Strahlteilerwürfels 3, welche in Richtung des zweiten Strahlteilerwürfels 13 angeordnet ist, ist eine konfokale Detektionsblendenanordnung 10 angebracht, welche beispielhafterweise aus einer zweiten Schlitzblende besteht. Die zweite Schlitzblende ist so orientiert, dass die von dem Messobjekt 8 reflektierte Abbildung der ersten Schlitzblende 2 wiederum näherungsweise deckungsgleich darauf abgebildet wird.

Der erste Strahlteilerwürfel 3 sowie die Beleuchtungseinrichtung können alternativ so angeordnet sein, dass durch den Strahlteiler transmittiertes Licht Richtung zweiten Strahlteilerwürfel 13 geleitet wird, während die Lichtquelle 1 auf dem reflektiven Pfad angeordnet ist.

Durch den zweiten Strahlteilerwürfel 13 wird der Strahl in zwei Teilstrahlen (14, 17) geteilt. Ein erster Teilstrahl 14 wird in Richtung einer ersten Detektionseinrichtung 16 gelenkt. Die Detektionseinrichtung 16 umfasst einen Zeilendetektor, welcher aus mehreren Pixeln besteht. Die Pixel sind entlang einer Reihe angeordnet, derart, dass Licht, welches in Richtung der langen Kante der zweiten Schlitzblende (konfokale Detektionsblendenanordnung 10) verteilt ist, entlang der Reihe von Pixeln abgebildet wird.

Der Zeilendetektor der Detektionseinrichtung 16 misst Gesamtintensitäten über alle verwendeten Wellenlängen in jedem Pixel des Zeilendetektors. Dies erlaubt die Erstellung eines Intensitätsprofils entlang der Richtung der langen Kante der Schlitzblenden.

Der zweite Teilstrahl 17 wird durch ein dispersives Element 18 (bspw. ein Beugungsgitter) in seine spektralen Komponenten aufgespaltet. Dies bildet ein zweidimensionales Lichtfeld, welches auf einen Matrixdetektor 20 abgebildet wird. Der Matrixdetektor ist also in der Lage, für jeden Ort entlang der langen Kante der Schlitzblenden und für jede Wellenlänge eine Intensität zu messen. Die zweite Detektionseinrichtung 26 ist eingerichtet, aus diesen gemessenen Intensitäten Höheninformationen des Messobjekts zu bestimmen.

Rechts unten in der Figur 2 ist die zweite Detektionseinrichtung 26 nochmals perspektivisch dargestellt.

Beispielsgemäß sind Linsen 12, 15 und 19 so angeordnet, dass die konfokale Detektionsblendenanordnung 10 auf die Detektoren abgebildet wird. Beispielhafterweise ist eine dritte Linse 12 zwischen dem ersten Strahlteiler 3 und dem zweiten Strahlteiler 13 angeordnet. Vorteilhafterweise ist die dritte Linse 12 so gewählt und angeordnet, dass das Licht im Strahlteiler 13 kollimiert ist.

Beispielsgemäß ist eine vierte Linse 15 zwischen dem zweiten Strahlteiler 13 und der ersten Detektionseinrichtung 16 angeordnet und eine fünfte Linse 19 zwischen dem dispersiven Element 18 und dem Matrixdetektor 20.

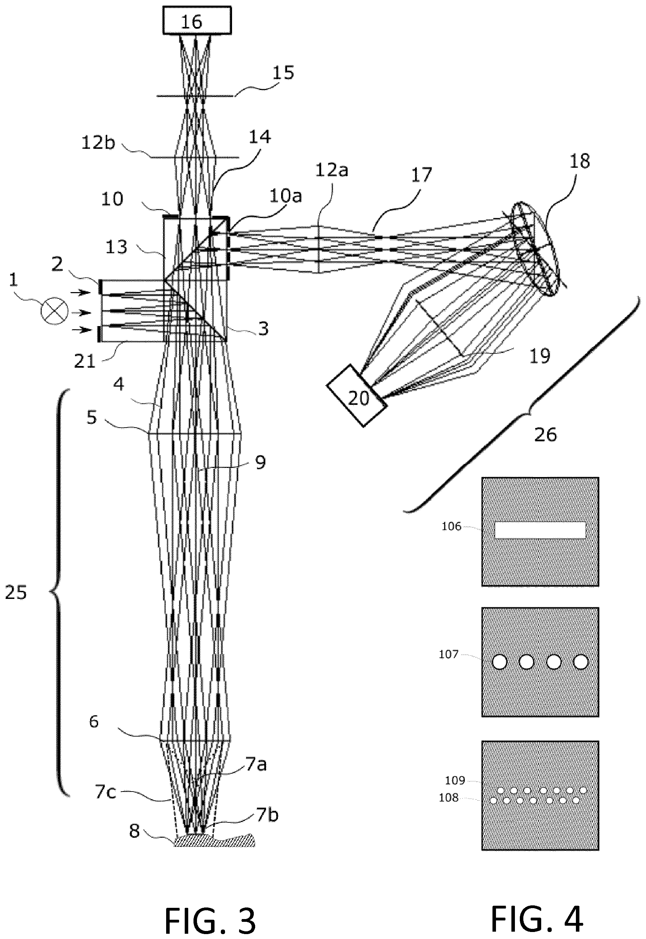

Figur 3 zeigt eine alternative Ausführungsform der Erfindung.

Eine Lichtquelle 1 emittiert Licht eine Mehrzahl von Wellenlängen. Das Licht fällt durch eine erste Schlitzblende 2. Die erste Schlitzblende 2 ist bevorzugt auf einen Glasblock 21, beispielsgemäß einem Glaswürfel aufgebracht. Die Verwendung eines Glasblocks 21 ist vorteilhaft bei der Konstruktion der Messeinrichtung und verhindert ein verschieben der Bauteile zueinander. Die Vorrichtung kann allerdings auch alternativ ohne den Glasblock 21 ausgeführt werden, wobei die dadurch verursachte Änderung der optischen Weglänge berücksichtigt werden muss.

Bevorzugt direkt an den Glasblock 21 angrenzend befindet sich ein erster Strahlteiler 3. Dieser reflektiert ein Teil des Lichts der Lichtquelle 1 in Richtung einer Abbildungsoptik 25 und eines Messobjekts 8, wie oben im Zusammenhang mit Figur 2 beschrieben.

Von dem Messobjekt 8 reflektiertes Licht fällt entlang des Strahlengangs 9 wieder zurück in den ersten Strahlteiler 3. Ein Teil des Lichts wird dabei transmittiert in Richtung des zweiten Strahlteilers 13. Dieser grenzt vorteilhafterweise direkt an den ersten Strahlteiler 3 an.

Der zweite Strahlteiler 13 teilt das Licht in einen ersten Teilstrahl 14 und einen zweiten Teilstrahl 17. Dabei ist in jedem der Teilstrahlen jeweils eine konfokale Detektionsblendenanordnung angeordnet: eine erste konfokale Detektionsblendenanordnung 10 im ersten Teilstrahl 14 und eine zweite konfokale Detektionsblendenanordnung 10a im zweiten Teilstrahl 17. Beispielsgemäß sind die erste und zweite konfokale Detektionsblendenanordnungen 10, 10a jeweils auf Oberflächen des zweiten Strahlteilers 13 aufgebracht.

Licht, welches auf der Oberfläche des Messobjekts 8 fokussiert ist, wird dabei durch die Abbildungsoptik 25 auf die erste und zweite konfokale Detektionsblendenanordnung 10, 10a abgebildet.

Der erste Teilstrahl 14 wird durch Linsen 12b und 15 auf einen Zeilendetektor einer ersten Detektionseinrichtung 16 abgebildet, welcher eine Gesamtintensität des darauf einfallenden Lichtes über alle Wellenlängen misst.

Der zweite Teilstrahl 17 wird durch ein Linse 12a kollimiert und durch ein dispersives Element 18, beispielsweise ein Beugungsgitter, spektral aufgespalten. Durch eine Linse 19 wird das dadurch entstehende Lichtfeld auf einen Matrixdetektor 20 fokussiert.

Figur 4 zeigt verschiedene konfokale Detektionsblendenanordnungen. Bevorzugt wird eine Schlitzblende 106 für die konfokale Detektionsblendenanordnungen 10 und 10a der in den Figuren 1 bis 3 gezeigten Ausführungsformen verwendet.

Alternativ wird eine Reihe von Lochblenden 107 verwendet. Beispielsgemäß entspricht der Durchmesser der Lochblenden 107 dabei dem Durchmesser der ersten Schlitzblende 2. Die Reihe von Lochblenden wird vorteilhafterweise nur für die zweite Detektionsblendenanordnung 10a eingesetzt.

Eine weitere Möglichkeit ist die Verwendung mindestens zwei versetzter Reihen von Lochblenden 108 und 109. Diese Anordnung ermöglicht es, eine große Punktdichte von Lochblenden zu haben, und dabei sogenannten "crosstalk", also störendes Signal von benachbarten Punkten der Oberfläche des Messobjekts, zu verringern.

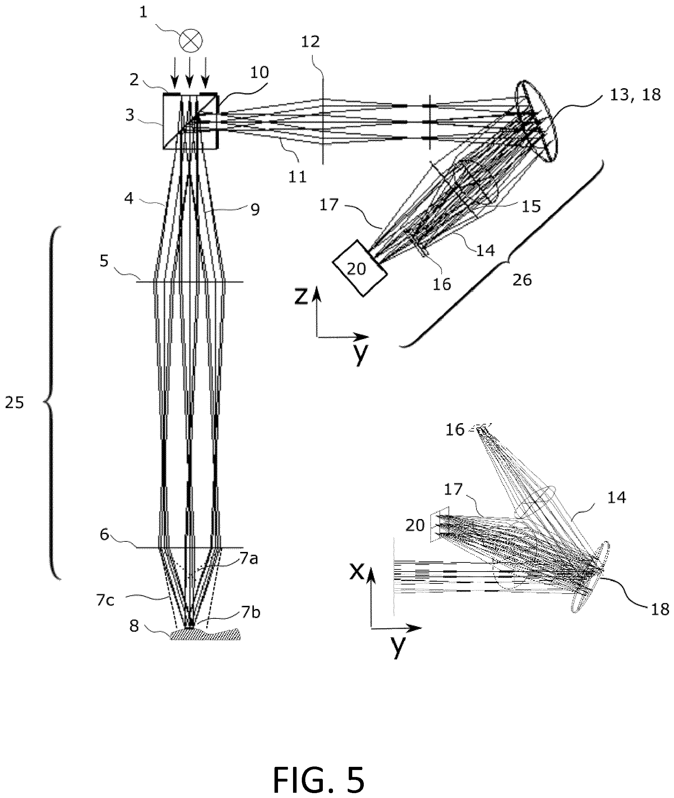

Figur 5 zeigt eine weitere alternative Ausführungsform der Erfindung. Statt eines Strahlteilerwürfels wird ein Beugungsgitter 18 gleichzeitig zur Teilung in zwei Teilstrahlen und zur spektralen Aufspaltung verwendet.

Die Teile der Messeinrichtung, welche die Beleuchtungseinrichtung, die Abbildungsoptik und den ersten Strahlteiler 3 betreffen, funktionieren wie oben betreffend Figur 2 beschrieben.

Nach dem ersten Strahlteiler 3 wird das Licht auf das Beugungsgitter 18 geleitet, welches gleichzeitig als Strahlteiler 13 fungiert. Beispielsgemäß ist zwischen dem ersten Strahlteiler 3 und dem Beugungsgitter 13, 18 mindestens eine Linse 12 angeordnet, um das Licht zu kollimieren.

Die nullte Beugungsordnung des Beugungsgitters 18 bildet beispielsgemäß den ersten Teilstrahl 14, während die spektral aufgespaltene erste Beugungsordnung den zweiten Teilstrahl 17 bildet. Der erste Teilstrahl 14 fällt auf einen Zeilendetektor einer Detektionseinrichtung 16, welcher Gesamtintensitäten am Ort einzelner Pixel des Zeilendetektors misst.

Der spektral aufgespaltene zweite Teilstrahl 17 fällt auf einen Matrixdetektor 20, welcher Intensitäten in Abhängigkeit von einem Ort x und einer Wellenlänge λ misst. Der Matrixdetektor 20 ist Teil einer zweiten Detektionseinrichtung 26, welche dazu eingerichtet ist, aus der spektralen Verteilung der Intensitäten eine Höheninformation des Messobjekts 8 zu gewinnen.

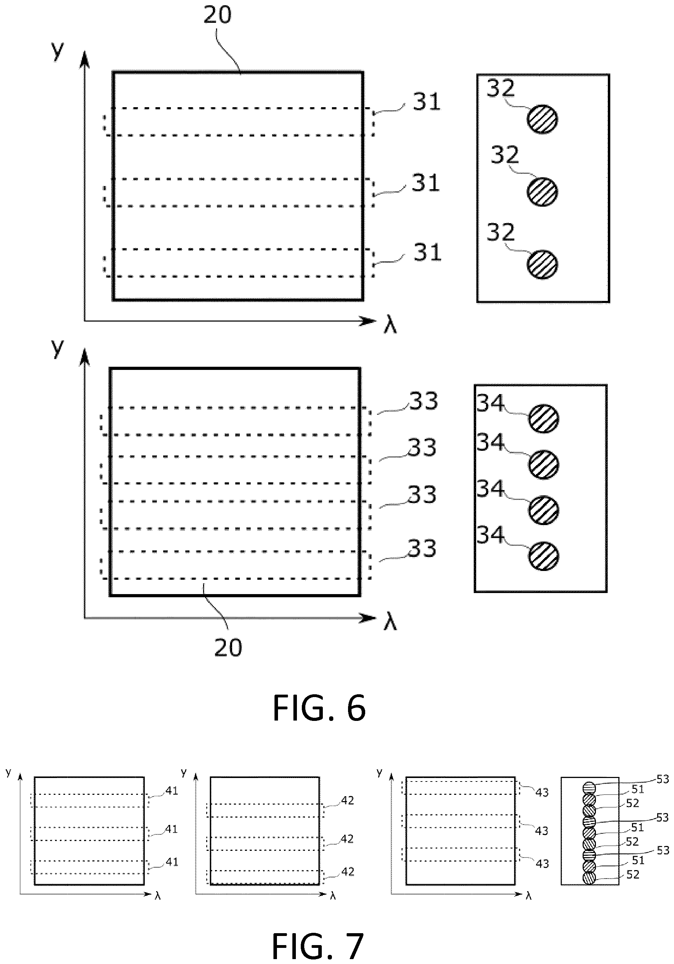

Figur 6 zeigt schematisch das Prinzip virtueller konfokaler Aperturen. Wie oben erläutert entspricht eine Dimension eines Matrixdetektors 20 der zweiten Detektionseinrichtung einer räumlichen Position entlang der auf dem Messobjekt 8 abgebildeten Schlitzblende (y-Achse), während die andere Dimension einer Wellenlänge λ entspricht. Das in die zweite Detektionseinrichtung einfallende Licht wird dabei entlang der λ-Achse spektral aufgespalten.

Eine Höheninformation kann immer nur für einen räumlich begrenzten, endlichen Bereich auf dem Messobjekt 8 gewonnen werden. Dieser räumliche Bereich entspricht einer virtuellen Apertur im chromatisch-konfokalen Messprinzip. Dabei wird ein Spektrum über die Pixel, welche in einem Bereich 31, 33 auf dem Matrixdetektor 20 liegen, betrachtet und aus dem Spektrum nach an sich bekannten Verfahren eine oder mehrere Höheninformationen gewonnen. Dies entspricht einer Betrachtung einer konfokalen Apertur 32, 34 in einer virtuellen Blende.

Einer der Vorteile des erfindungsgemäßen Verfahrens ist es, dass die Bereiche 31, 33 frei gewählt werden können. Werden beispielsweise die Abstände zwischen den Bereichen 31 groß gewählt, entspricht dies beabstandeten virtuellen Aperturen 32. Werden die Abstände kleiner gewählt (Bereiche 33), so entspricht dies enger gesetzten virtuellen Aperturen 34. Ebenso können die Durchmesser der virtuellen Aperturen verändert werden, indem die Breiten in y-Richtung der Bereiche 31, 33 verändert werden.

Figur 7 zeigt schematisch das Prinzip eines virtuellen Scans des zweiten Detektors entlang der x-Achse. In diesem Fall werden, während die Messeinrichtung und das Messobjekt in derselben relativen Position bleiben, die Pixelbereiche verschoben. Beispielhaft führen die drei gewählten Gruppen von Pixelbereichen 41, 42, 43 zu sich nahezu überlappenden virtuellen Aperturen 51, 52, 53.

Durch derartige überlappende virtuellen Aperturen 51, 52, 53 kann ein höher aufgelöstes Höhenprofil erstellt werden, als dies mit reellen Aperturen möglich wäre.

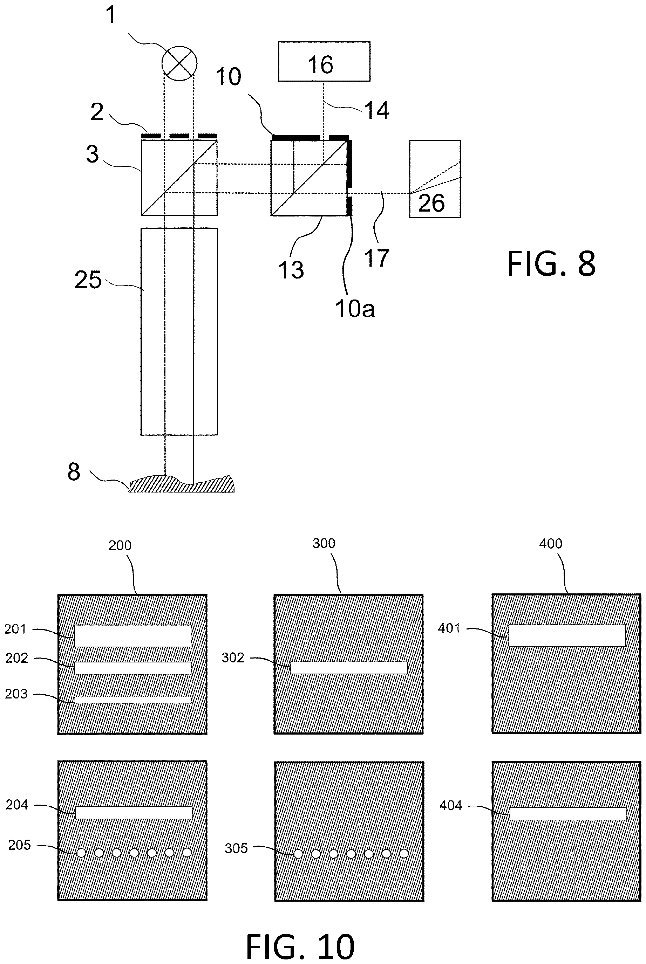

Figur 8 zeigt schematisch eine beispielsgemäße chromatisch konfokale Messeinrichtung.

Die gezeigte Vorrichtung entspricht weitgehend der Messeinrichtung der Figur 1, wobei die Beleuchtungsblendenanordnung 2 mindestens zwei Öffnungen umfasst, von denen mindestens eine als Schlitzblende ausgeführt ist. Dementsprechend werden alle Öffnungen der Beleuchtungsblendenanordnung durch die Abbildungsoptik 25 auf das Messobjekt 8 abgebildet.

Die erste konfokale Detektionsblendenanordnung 10 ist in dieser Ausführungsform zwischen dem zweiten Strahlteiler 13 und der ersten Detektionseinrichtung 16 angeordnet. Die erste konfokale Detektionsblendenanordnung 10 umfasst dabei nur eine einzige Schlitzblende, welche mit der Schlitzblende der Beleuchtungsblendenanordnung 2 als konfokale Apertur zusammenwirkt. Daher wird nur einer der beleuchteten Bereiche des Messobjektes 8 auf die Detektionseinrichtung 16 abgebildet.

Eine zweite konfokale Detektionsblendenanordnung 10a ist zwischen dem zweiten Strahlteiler 13 und der zweiten Detektionseinrichtung 26 angeordnet. Die zweite konfokale Detektionsblendenanordnung 10a umfasst eine oder mehrere Öffnungen, welche mit denjenigen Öffnungen der Beleuchtungsblendenanordnung 2 als konfokale Apertur zusammenwirken, welche nicht mit der ersten konfokale Detektionsblendenanordnung 10 zusammenwirken. Daher wird ein anderer Bereich des Messobjektes auf die zweite Detektionseinrichtung 26 abgebildet. Durch die erste und zweite konfokale Detektionsblendenanordnung 10, 10a wird also jeweils ein räumlicher Teil der Abbildung der Beleuchtungsblendenanordnung vollständig blockiert.

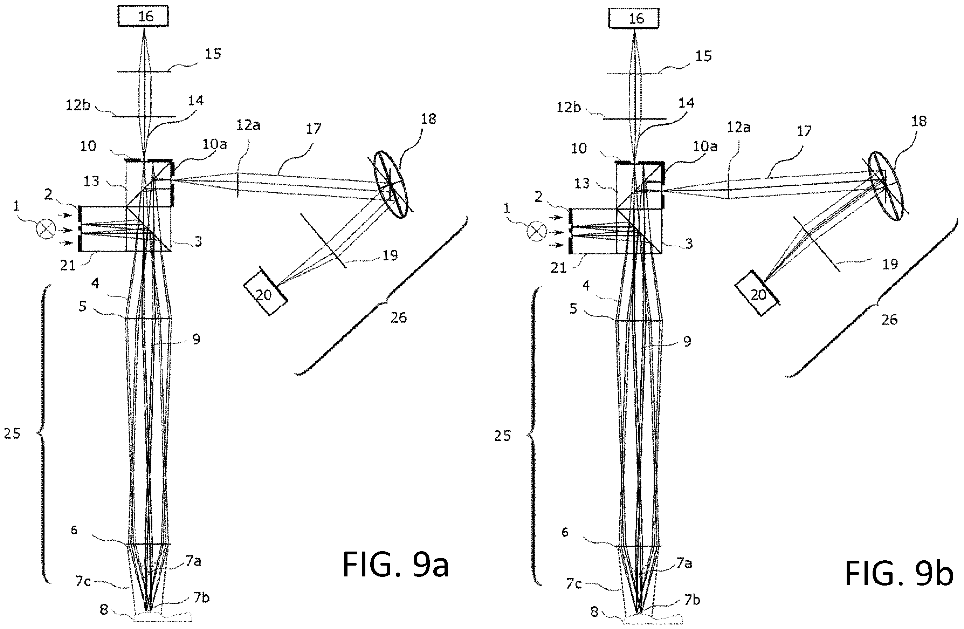

In einer bevorzugten Ausführungsform der Erfindung ist die zweite konfokale Detektionsblendenanordnung 10a austauschbar. Alternativ umfasst diese einen beweglichen Teil ("shutter"), welcher wahlweise einen Teil der Öffnungen der zweiten konfokalen Detektionsblendenanordnung 10a abdeckt. Zwei Zustände dieser bevorzugten Ausführungsform sind in Figur 9a und 9b gezeigt.

Der Aufbau der in Figuren 9a und 9b gezeigten Ausführungsform entspricht im Wesentlichen der Figur 3, wobei die Beleuchtungs- und Detektionsblendenanordnungen 2, 10, 10a um 90° gedreht sind.

Die Beleuchtungsblendenanordnung hat mindestens zwei Öffnungen, hier beispielhaft als erste und zweite Schlitzblenden beschrieben.

Die Abbildung erfolgt wie im Zusammenhang mit Figur 8 beschrieben. Die erste konfokale Detektionsblendenanordnung 10 umfasst eine einzige Schlitzblende, wobei die erste Schlitzblende der Beleuchtungsblendenanordnung auf die Schlitzblende der ersten konfokalen Detektionsblendenanordnung 10 abgebildet wird und der Teilstrahl 14 entsprechend in die Detektionseinrichtung 16 eintritt.

Die zweite konfokale Detektionsblendenanordnung 10a wird in Figur 9a als eine erste austauschbaren Maske gezeigt, welche eine Schlitzblende aufweist, auf welche die zweite Schlitzblende der Beleuchtungsblendenanordnung abgebildet wird. Dementsprechend wird ein Teilstrahl 17 in die zweite Detektionseinrichtung 26 geleitet, welcher einen anderen räumlichen Bereich als der Teilstrahl 14 abbildet.

Beispielsgemäß ist die zweite konfokale Detektionsblendenanordnung 10a austauschbar. In Figur 9b wird eine zweite austauschbare Maske gezeigt, welche eine Schlitzblende an einer anderen Stelle hat, derart, dass die erste Schlitzblende der Beleuchtungsblendenanordnung auf diese abgebildet wird.

Die zweite Detektionseinrichtung 26 kann somit wahlweise den gleichen Bereich oder einen unterschiedlichen Bereich des Messobjektes wie die erste Detektionseinrichtung 16 empfangen.

In einer besonders bevorzugten Ausführungsform der Erfindung haben die Schlitzblenden der Beleuchtungsblendenanordnung unterschiedliche Breiten, wobei jeweils die Breite der entsprechenden Schlitzblende der ersten oder weiten Detektionsblendenanordnung 10, 10a dazu gleich ist.

Besonders bevorzugt umfasst die Beleuchtungsblendenanordnung mehr als zwei Schlitzblenden unterschiedlicher Dimensionen, wobei die austauschbaren Masken der zweite konfokale Detektionsblendenanordnung 10a jeweils darauf abgestimmt sind.

In einer alternativen Ausführungsform der Erfindung wird die zweite Schlitzblende der Beleuchtungsblendenanordnung durch eine Reihe von Lochblenden ersetzt, wobei vorteilhafterweise die zweite konfokale Detektionsblendenanordnung 10a mit einer entsprechenden Reihe von Lochblenden versehen ist.

Alternativ zu austauschbaren Masken der zweiten konfokalen Detektionsblendenanordnung 10a kann diese einen beweglichen Teil ("shutter") umfassen, welche jeweils die nicht benötigten Öffnungen abdeckt.

Figur 10 zeigt bevorzugte Masken, welche in der Beleuchtungsblendenanordnung 2 und Detektionsblendenanordnung eingesetzt werden.

Dabei ist Maske 200 die Beleuchtungsblendenanordnung, hier beispielhafterweise mit drei Schlitzblenden 201, 202, 203. Eine passende Maske für die zweite konfokale Detektionsblendenanordnung 10a ist Maske 300, welche eine einzelne Schlitzblende 302 umfasst, die von der Anordnung und Dimensionen der Schlitzblende 202 entspricht. Diese Maske kann ausgetauscht werden gegen eine nicht gezeigte Maske mit einer Schlitzblende, welcher der Schlitzblende 203 entspricht. 400 ist die passende Maske für die erste konfokale Detektionsblendenanordnung 10 mit einer einzigen Schlitzblende 401, welche von der Anordnung und Dimension her der Schlitzblende 201 entspricht.

Als Alternative für die Maske 200 ist eine Maske mit einer Schlitzblende 204 und einer Reihe von Lochblenden 205 gezeigt. In diesem Ausführungsbeispiel umfasst die zweite konfokale Detektionsblendenanordnung 10a eine entsprechende Reihe von Lochblenden 305 und die erste konfokale Detektionsblendenanordnung 10 ein Schlitzblende 404.

## Patentansprüche

1. Chromatisch konfokale Messeinrichtung, umfassend
eine Lichtquelle (1), welche Licht einer Mehrzahl von Wellenlängen emittiert, insbesondere ein kontinuierliches Spektrum,
eine Abbildungsoptik (25), wobei die Abbildungsoptik (25) eine chromatische Aberration aufweist, derart, dass Licht unterschiedlicher Wellenlängen in unterschiedlichen Abständen von der Abbildungsoptik fokussiert wird
einen ersten Strahlteiler (3), wobei Licht der Lichtquelle (1) über den ersten Strahlteiler (3) und die Abbildungsoptik (25) auf ein Messobjekt abgebildet wird, und wobei von dem Messobjekt reflektiertes Licht durch die Abbildungsoptik und den ersten Strahlteiler (3) auf eine erste konfokale Detektionsblendenanordnung (10) abgebildet wird,
eine erste Detektionseinrichtung (16), welche durch die erste Detektionsblendenanordnung (10) fallendes Licht erfasst und auswertet,
wobei die Messeinrichtung eine Beleuchtungsblendenanordnung (2) umfasst, welche zumindest eine erste Öffnung umfasst, die mit einer Detektionsöffnung der ersten Detektionsblendenanordnung (10) als konfokale Apertur zusammenwirkt,
wobei die Messeinrichtung eine zweite Detektionseinrichtung (26) und einen zweiten Strahlteiler (13), insbesondere einen nicht polarisierenden Strahlteiler, umfasst, wobei der zweite Strahlteiler (13) das vom Messobjekt (8) reflektierte Licht in einen ersten und einen zweiten Teilstrahl (14, 17) aufteilt,
wobei die erste Detektionseinrichtung (16) eingerichtet ist, Licht des ersten Teilstrahls (14) mittels eines Zeilendetektors zu erfassen und Gesamtintensitäten über alle Wellenlängen auszuwerten und ein Gesamtintensitätsprofil und/oder ein Gesamtintensitätsbild zu erstellen, und
wobei die zweite Detektionseinrichtung (26) eingerichtet ist, zur gleichen Zeit Licht des zweiten Teilstrahls (17) spektral aufzuspalten und Intensitäten des Lichts einer Mehrzahl einzelner Wellenlängen oder einer Mehrzahl von Wellenlängenbereichen zu erfassen und auszuwerten,
**dadurch gekennzeichnet**, 1f
dass die erste Öffnung der Beleuchtungsblendenanordnung eine Schlitzblende ist. 1f

2. Messeinrichtung nach Anspruch 1, **dadurch gekennzeichnet, dass** die erste konfokale Detektionsblendenanordnung (10) im Strahlengang zwischen dem zweiten Strahlteiler (13) und der ersten Detektionseinrichtung (16) angeordnet ist und eine zweite konfokale Detektionsblendenanordnung (10a) im Strahlengang zwischen dem zweiten Strahlteiler und der zweiten Detektionseinrichtung (26) angeordnet ist.

3. Messeinrichtung nach Anspruch 2, **dadurch gekennzeichnet, dass** die Beleuchtungsblendenanordnung (2) eine Mehrzahl von Öffnungen umfasst, wobei eine zweite Öffnung der Beleuchtungsblendenanordnung (2) mit einer Detektionsöffnung der zweiten Detektionsblendenanordnung (10a) als konfokale Apertur zusammenwirkt.

4. Messeinrichtung nach Anspruch 2, **dadurch gekennzeichnet, dass** die Beleuchtungsblendenanordnung (2) eine Mehrzahl von Öffnungen umfasst, und die zweite Detektionsblendenanordnung (10a) austauschbar ausgeführt ist oder einen beweglichen Teil umfasst, derart, dass wahlweise eine zweite Öffnung der Beleuchtungsblendenanordnung oder eine dritte Öffnung der Beleuchtungsblendenanordnung mit einer Detektionsöffnung der zweiten Detektionsblendenanordnung (10a) als konfokale Apertur zusammenwirkt.

5. Messeinrichtung nach Anspruch 3 oder 4, **dadurch gekennzeichnet, dass** die Öffnungen der Beleuchtungsblendenanordnung, insbesondere die erste Öffnung und die zweite Öffnung, jeweils ausschließlich entweder mit einer Detektionsöffnung der ersten Detektionsblendenanordnung (10) oder mit einer Detektionsöffnung der zweiten Detektionsblendenanordnung (10a) als konfokale Apertur zusammenwirkt.

6. Messeinrichtung nach Anspruch 2, **dadurch gekennzeichnet, dass** die Beleuchtungsblendenanordnung (2) eine Mehrzahl von Öffnungen umfasst, und die zweite Detektionsblendenanordnung (10a) austauschbar ausgeführt ist oder einen beweglichen Teil umfasst, derart, dass wahlweise eine zweite Öffnung der Beleuchtungsblendenanordnung oder die erste Öffnung der Beleuchtungsblendenanordnung mit einer Detektionsöffnung der zweiten Detektionsblendenanordnung (10a) als konfokale Apertur zusammenwirkt.

7. Messeinrichtung nach einem der Ansprüche 3 bis 6, **dadurch gekennzeichnet, dass** die erste und die zweite Öffnung der Beleuchtungsblendenanordnung Schlitzblenden sind, deren Breiten sich unterscheiden, oder die zweite Öffnung eine Lochblende ist, wobei sich insbesondere die Breite der Schlitzblende - erste Öffnung - von dem Durchmesser der Lochblende unterscheidet.

8. Messeinrichtung nach Anspruch 1, **dadurch gekennzeichnet, dass** die erste konfokale Detektionsblendenanordnung (10) im Strahlengang zwischen dem zweiten Strahlteiler (13) und der ersten Detektionseinrichtung (16) angeordnet ist und eine Mehrzahl von optischen Fasern zwischen dem zweiten Strahlteiler (13) und der zweiten Detektionseinrichtung (16) den zweiten Teilstrahl (17) leitet, wobei insbesondere die Enden der Fasern als konfokale Aperturen dienen.

9. Messeinrichtung nach einem der vorhergehenden Ansprüche, **dadurch gekennzeichnet, dass** eine Auswerterate der ersten Detektionseinrichtung (16), insbesondere des Zeilendetektors, höher ist als eine Auswerterate der zweiten Detektionseinrichtung (26).

10. Messeinrichtung nach einem der vorhergehenden Ansprüche, **dadurch gekennzeichnet, dass** die zweite Detektionseinrichtung (26) und/oder eine zugeordnete Auswerteeinrichtung dazu eingerichtet ist, aus der von der zweiten Detektionseinrichtung (26) erfassten Intensitätsverteilungen über die Mehrzahl einzelner Wellenlängen oder Mehrzahl von Wellenlängenbereichen auf eine oder mehrere Höheninformationen der Oberfläche des Messobjekts (8) zurückzuschließen.

11. Messeinrichtung nach einem der vorhergehenden Ansprüche, **dadurch gekennzeichnet, dass** das vom Messobjekt (8) reflektierte Licht durch eine Freistrahloptik zwischen dem Messobjekt (8) und der ersten Detektionseinrichtung (16) propagiert.

12. Messeinrichtung nach einem der vorhergehenden Ansprüche, **dadurch gekennzeichnet, dass** das Licht von der Lichtquelle (1) bis zum Messobjekt (8) durch eine Freistrahloptik propagiert.

13. Messeinrichtung nach einem der vorhergehenden Ansprüche, **dadurch gekennzeichnet, dass** der zweite Strahlteiler (13) ein vorgegebenes Teilungsverhältnis zwischen den Teilstrahlen (14, 17) bedingt, wobei das Teilungsverhältnis so gewählt wird, dass die Intensitäten der zwei Teilstrahlen (14, 17) nicht gleich sind.

14. Messeinrichtung nach einem der vorhergehenden Ansprüche, **dadurch gekennzeichnet, dass** der zweite Strahlteiler (13) als ein Beugungsgitter (18) ausgeführt ist, wobei die nullte Beugungsordnung den ersten Teilstrahl (14) bildet und die erste Beugungsordnung den zweiten Teilstrahl (17) bildet.

15. Verfahren zur chromatisch konfokalen Vermessung eines Messobjekts (8), wobei das Messobjekt (8) mindestens in einem schlitzförmigen räumlichen Bereich mittels einer Lichtquelle (1), welche Licht einer Mehrzahl von Wellenlängen emittiert, und mittels einer Beleuchtungsblendenanordnung (2), beleuchtet wird, wobei Licht unterschiedlicher Wellenlängen in unterschiedlichen Höhen im Bereich des Messobjekts (8) fokussiert wird und von dem Messobjekt (8) reflektiertes Licht auf eine erste konfokale Detektionsblendenanordnung (10), abgebildet wird, derart, dass die erste konfokale Detektionsblendenanordnung (10) als konfokale Apertur fungiert, wobei das Licht durch eine erste Detektionseinrichtung (16) erfasst und ausgewertet wird, wobei von dem Messobjekt (8) reflektierte Licht in zwei Teilstrahlen (14, 17) aufgespalten wird, wobei eine Gesamtintensität über alle Wellenlängen des ersten Teilstrahls (14) erfasst und ausgewertet wird und das Licht des zweiten Teilstrahls (17) spektral aufgespalten wird und spektrale Intensitäten einzelner Wellenlängen oder Wellenlängenbereichen erfasst und ausgewertet werden, **dadurch gekennzeichnet, dass** die Beleuchtungsblendenanordnung eine Schlitzblende umfasst.

16. Verfahren nach Anspruch 15, **dadurch gekennzeichnet, dass** erfasste spektrale Intensitäten nach Maßgabe wählbarer virtueller konfokaler Aperturen (32, 34) ausgewertet werden.

17. Verfahren nach Anspruch 16, **dadurch gekennzeichnet, dass** für einen räumlichen Bereich des Messobjekts (8) mehrere Auswertungen mit verschiedenen virtuellen konfokalen Aperturen (32, 34, 51-53) durchgeführt werden, wobei insbesondere die Orte der virtuellen konfokalen Aperturen (32, 34, 51-53) unterschiedlich gewählt werden.

## Claims

1. A chromatic confocal measuring device, comprising a light source (1) which emits light of a plurality of wavelengths, in particular a continuous spectrum, imaging optics (25), the imaging optics (25) having a chromatic aberration such that light of different wavelengths is focused at different distances from the imaging optics a first beam splitter (3), wherein light from the light source (1) is imaged onto a measurement object via the first beam splitter (3) and the imaging optics (25), and wherein light reflected from the measurement object is imaged onto a first confocal detection aperture arrangement (10) through the imaging optics and the first beam splitter (3),
a first detection device (16) which detects and evaluates light falling through the first detection aperture arrangement (10),
wherein the measuring device comprises an illumination aperture arrangement (2) which comprises at least a first aperture which interacts with a detection aperture of the first detection aperture arrangement (10) as a confocal aperture,
wherein the measuring device comprises a second detection device (26) and a second beam splitter (13), in particular a non-polarizing beam splitter, wherein the second beam splitter (13) splits the light reflected by the measuring object (8) into a first and a second partial beam (14, 17),
wherein the first detection device (16) is configured to detect light of the first partial beam (14) by means of a line detector and to evaluate total intensities over all wavelengths and to generate a total intensity profile and/or a total intensity image, and
wherein the second detection device (26) is configured to spectrally split light of the second partial beam (17) at the same time and to detect and evaluate intensities of the light of a plurality of individual wavelengths or a plurality of wavelength ranges,
**characterized in that** the first aperture of the illumination aperture arrangement is a slit aperture.

2. The measuring device according to claim 1, **characterized in that** the first confocal detection aperture arrangement (10) is arranged in the beam path between the second beam splitter (13) and the first detection device (16), and a second confocal detection aperture arrangement (10a) is arranged in the beam path between the second beam splitter and the second detection device (26).

3. The measuring device according to claim 2, **characterized in that** the illumination aperture arrangement (2) comprises a plurality of apertures, wherein a second aperture of the illumination aperture arrangement (2) cooperates with a detection aperture of the second detection aperture arrangement (10a) as a confocal aperture.

4. The measuring device according to claim 2, **characterized in that** the illumination aperture arrangement (2) comprises a plurality of apertures, and the second detection aperture arrangement (10a) is designed to be exchangeable or comprises a movable part, such that optionally a second aperture of the illumination aperture arrangement or a third aperture of the illumination aperture arrangement cooperates with a detection aperture of the second detection aperture arrangement (10a) as a confocal aperture.

5. The measuring device according to claim 3 or 4, **characterized in that** the openings of the illumination aperture arrangement, in particular the first opening and the second opening, each cooperate exclusively either with a detection opening of the first detection aperture arrangement (10) or with a detection opening of the second detection aperture arrangement (10a) as a confocal aperture.

6. The measuring device according to claim 2, **characterized in that** the illumination aperture arrangement (2) comprises a plurality of apertures, and the second detection aperture arrangement (10a) is designed to be replaceable or comprises a movable part such that optionally a second aperture of the illumination aperture arrangement or the first aperture of the illumination aperture arrangement cooperates with a detection aperture of the second detection aperture arrangement (10a) as a confocal aperture.

7. The measuring device according to any one of claims 3 to 6, **characterized in that** the first and the second aperture of the illumination aperture arrangement are slit apertures whose widths differ, or the second aperture is a pinhole aperture, wherein in particular the width of the slit aperture - first aperture - differs from the diameter of the pinhole aperture.

8. The measuring device according to claim 1, **characterized in that** the first confocal detection aperture arrangement (10) is arranged in the beam path between the second beam splitter (13) and the first detection device (16), and a plurality of optical fibers between the second beam splitter (13) and the second detection device (16) guide the second partial beam (17), in particular the ends of the fibers serving as confocal apertures.

9. The measuring device according to one of the preceding claims, **characterized in that** an evaluation rate of the first detection device (16), in particular of the line detector, is higher than an evaluation rate of the second detection device (26).

10. The measuring device according to one of the preceding claims, **characterized in that** the second detection device (26) and/or an associated evaluation device is configured to infer one or more pieces of height information of the surface of the measured object (8) from the intensity distributions over the plurality of individual wavelengths or plurality of wavelength ranges detected by the second detection device (26).

11. The measuring device according to one of the preceding claims, **characterized in that** the light reflected from the measuring object (8) propagates through a free-beam optical system between the measuring object (8) and the first detection device (16).

12. The measuring device according to one of the preceding claims, **characterized in that** the light propagates from the light source (1) to the measurement object (8) through free-beam optics.

13. The measuring device according to one of the preceding claims, **characterized in that** the second beam splitter (13) requires a predetermined splitting ratio between the partial beams (14, 17), the splitting ratio being selected such that the intensities of the two partial beams (14, 17) are not equal.

14. The measuring device according to one of the preceding claims, **characterized in that** the second beam splitter (13) is designed as a diffraction grating (18), the zero diffraction order forming the first partial beam (14) and the first diffraction order forming the second partial beam (17).

15. A method for chromatic confocal measurement of a measurement object (8), wherein the measurement object (8) is illuminated at least in a slit-shaped spatial region by means of a light source (1), which emits light of a plurality of wavelengths, and by means of an illumination aperture arrangement, wherein light of different wavelengths is focused at different heights in the region of the measurement object (8) and light reflected from the measurement object (8) is imaged onto a first confocal detection aperture arrangement (10) in such a way that the first confocal detection aperture arrangement (10) functions as a confocal aperture, wherein the light is detected and evaluated by a first detection device (16), wherein
light reflected from the measurement object (8) is split into two partial beams (14, 17), a total intensity over all wavelengths of the first partial beam (14) being detected and evaluated and the light of the second partial beam (17) is split spectrally and spectral intensities of individual wavelengths or wavelength ranges are detected and evaluated, **characterized in in that** the illumination diaphragm arrangement comprises a slit diaphragm.

16. The method according to claim 15, **characterized in that** detected spectral intensities are evaluated according to selectable virtual confocal apertures (32, 34).

17. The method according to claim 16, **characterized in that** several evaluations with different virtual confocal apertures (32, 34, 51-53) are carried out for a spatial region of the measurement object (8), wherein in particular the locations of the virtual confocal apertures (32, 34, 51-53) are selected differently.

## Revendications

1. Dispositif de mesure confocale chromatique, comprenant une source lumineuse (1) qui émet de la lumière d'une pluralité de longueurs d'onde, notamment un spectre continu,
une optique d'imagerie (25), dans lequel l'optique d'imagerie (25) présente une aberration chromatique de telle sorte que de la lumière de différentes longueurs d'onde est réglée par l'optique d'imagerie à différentes distances,
un premier séparateur de faisceau (3), dans lequel de la lumière de la source lumineuse (1) est imagée sur un objet de mesure par le biais du premier séparateur de faisceau (3) et de l'optique d'imagerie (25), et dans lequel de la lumière reflétée par l'objet de mesure est imagée sur un premier agencement de diaphragmes de détection confocaux (10) par l'optique d'imagerie et le premier séparateur de faisceau (3),
un premier dispositif de détection (16) qui détecte et analyse de la lumière tombant à travers le premier agencement de diaphragmes de détection (10), dans lequel le dispositif de mesure comprend un agencement de diaphragmes d'éclairage (2) qui comprend au moins une première ouverture qui coopère avec une ouverture de détection du premier agencement de diaphragmes de détection (10) en tant qu'ouverture confocale,
dans lequel le dispositif de mesure comprend un second dispositif de détection (26) et un second séparateur de faisceau (13), notamment un séparateur de faisceau non polarisant, dans lequel le second séparateur de faisceau (13) divise la lumière reflétée par l'objet de mesure (8) en un premier et un second faisceau partiel (14, 17),
dans lequel le premier dispositif de détection (16) est configuré pour détecter de la lumière du premier faisceau partiel (14) au moyen d'un détecteur de lignes et analyser des intensités totales sur toutes les longueurs d'onde, et créer un profil d'intensité totale et/ou une image d'intensité totale, et
dans lequel le second dispositif de détection (26) est configuré pour scinder de manière spectrale en même temps de la lumière du second faisceau partiel (17), et détecter et analyser des intensités de la lumière d'une pluralité de longueurs d'onde individuelles ou d'une pluralité de plages de longueurs d'onde,
**caractérisé en ce**
**que** la première ouverture de l'agencement de diaphragmes d'éclairage est une fente de diaphragme.

2. Dispositif de mesure selon la revendication 1, **caractérisé en ce que** le premier agencement de diaphragmes de détection confocaux (10) est disposé dans la trajectoire du faisceau entre le second séparateur de faisceau (13) et le premier dispositif de détection (16), et un second agencement de diaphragmes de détection confocaux (10a) est disposé dans la trajectoire du faisceau entre le second séparateur de faisceau (13) et le second dispositif de détection (26).

3. Dispositif de mesure selon la revendication 2, **caractérisé en ce que** l'agencement de diaphragmes d'éclairage (2) comprend une pluralité d'ouvertures, dans lequel une deuxième ouverture de l'agencement de diaphragmes d'éclairage (2) coopère avec une ouverture de détection du second agencement de diaphragmes de détection (10a) en tant qu'ouverture confocale.

4. Dispositif de mesure selon la revendication 2, **caractérisé en ce que** l'agencement de diaphragmes d'éclairage (2) comprend une pluralité d'ouvertures, et le second agencement de diaphragmes de détection (10a) est réalisé de manière à pouvoir être échangé ou comprend une partie mobile de telle sorte qu'une deuxième ouverture de l'agencement de diaphragmes d'éclairage ou une troisième ouverture de l'agencement de diaphragmes d'éclairage coopère au choix avec une ouverture de détection du second agencement de diaphragmes de détection (10a) en tant qu'ouverture confocale.

5. Dispositif de mesure selon la revendication 3 ou 4, **caractérisé en ce que** les ouvertures de l'agencement de diaphragmes d'éclairage, notamment la première ouverture et la deuxième ouverture, coopèrent chacune exclusivement soit avec une ouverture de détection du premier agencement de diaphragmes de détection (10), soit avec une ouverture de détection du second agencement de diaphragmes de détection (10a ) en tant qu'ouverture confocale.

6. Dispositif de mesure selon la revendication 2, **caractérisé en ce que** l'agencement de diaphragmes d'éclairage (2) comprend une pluralité d'ouvertures, et le second agencement de diaphragmes de détection (10a) est réalisé de manière à pouvoir être échangé ou comprend une partie mobile de telle sorte qu'une deuxième ouverture de l'agencement de diaphragmes d'éclairage ou la première ouverture de l'agencement de diaphragmes d'éclairage coopère au choix avec une ouverture de détection du second agencement de diaphragmes de détection (10a) en tant qu'ouverture confocale.

7. Dispositif de mesure selon une des revendications 3 à 6, **caractérisé en ce que** la première et la deuxième ouverture de l'agencement de diaphragmes d'éclairage sont des fentes de diaphragme dont les largeurs se différencient, ou la deuxième ouverture est un diaphragme à trou, dans lequel la largeur de la fente de diaphragme, c'est-à-dire première ouverture, se différencie notamment du diamètre du diaphragme à trou.

8. Dispositif de mesure selon la revendication 1, **caractérisé en ce que** le premier agencement de diaphragmes de détection confocaux (10) est disposé dans la trajectoire du faisceau entre le second séparateur de faisceau (13) et le premier dispositif de détection (16), et une pluralité de fibres optiques guide le second faisceau partiel (17) entre le second séparateur de faisceau (13) et le second dispositif de détection (16), dans lequel les extrémités des fibres servent notamment d'ouvertures confocales.

9. Dispositif de mesure selon une des revendications précédentes, **caractérisé en ce qu'**un débit d'analyse du premier dispositif de détection (16), notamment du détecteur de lignes, est supérieur à un débit d'analyse du second dispositif de détection (26).

10. Dispositif de mesure selon une des revendications précédentes, **caractérisé en ce que** le second dispositif de détection (26) et/ou un dispositif d'analyse associé est configuré pour déduire à partir des distributions d'intensités détectées par le second dispositif de détection (26) sur la pluralité de longueurs d'onde individuelles ou pluralité de plages de longueurs d'onde une ou plusieurs informations de hauteur de la surface de l'objet de mesure (8).

11. Dispositif de mesure selon une des revendications précédentes, **caractérisé en ce que** la lumière reflétée par l'objet de mesure (8) se propage à travers une optique en espace libre entre l'objet de mesure (8) et le premier dispositif de détection (16).

12. Dispositif de mesure selon une des revendications précédentes, **caractérisé en ce que** la lumière se propage de la source lumineuse (1) jusqu'à l'objet de mesure (8) à travers une optique en espace libre.

13. Dispositif de mesure selon une des revendications précédentes, **caractérisé en ce que** le second séparateur de faisceau (13) conditionne un rapport de division prédéfini entre les faisceaux partiels (14, 17), dans lequel le rapport de division est choisi de sorte que les intensités des deux faisceaux partiels (14, 17) ne sont pas identiques.

14. Dispositif de mesure selon une des revendications précédentes, **caractérisé en ce que** le second séparateur de faisceau (13) est réalisé en tant que réseau de diffraction (18), dans lequel l'ordre de diffraction zéro forme le premier faisceau partiel (14) et le premier ordre de diffraction forme le second faisceau partiel (17).

15. Procédé de mesure confocale chromatique d'un objet de mesure (8), dans lequel l'objet de mesure (8) est éclairé au moins dans une région spatiale en forme de fente au moyen d'une source lumineuse (1) qui émet de la lumière d'une pluralité de longueurs d'onde, et au moyen d'un agencement de diaphragmes d'éclairage (2), dans lequel de la lumière de différentes longueurs d'onde est réglée à différentes hauteurs dans la région de l'objet de mesure (8) et de la lumière reflétée par l'objet de mesure (8) est imagée sur un premier agencement de diaphragmes de détection confocaux (10) de telle sorte que le premier agencement de diaphragmes de détection confocaux (10) fonctionne en tant qu'ouverture confocale, dans lequel la lumière est détectée et analysée par un premier dispositif de détection (16),
dans lequel de la lumière reflétée par l'objet de mesure (8) est scindée en deux faisceaux partiels (14, 17), dans lequel une intensité totale sur toutes les longueurs d'onde du premier faisceau partiel (14) est détectée et analysée,
et la lumière du second faisceau partiel (17) est scindée de manière spectrale et des intensités spectrales de longueurs d'onde individuelles ou plages de longueurs d'onde sont détectées et analysées,
**caractérisé en ce**
**que** l'agencement de diaphragmes d'éclairage comprend une fente de diaphragme.

16. Procédé selon la revendication 15, **caractérisé en ce que** des intensités spectrales détectées sont analysées conformément à des ouvertures confocales virtuelles pouvant être choisies (32, 34).

17. Procédé selon la revendication 16, **caractérisé en ce que** plusieurs analyses avec différentes ouvertures confocales virtuelles (32, 34, 51 à 53) sont réalisées pour une région spatiale de l'objet de mesure (8), dans lequel les emplacements des ouvertures confocales virtuelles (32, 34, 51 à 53) sont notamment choisis différemment.
